**Europäisches Patentamt**

**European Patent Office**

**Office européen des brevets**

(19)

(11) Publication number : **0 557 115 A1**

## (12) EUROPEAN PATENT APPLICATION

(21) Application number : **93301225.4**

(22) Date of filing : **19.02.93**

(51) Int. Cl.⁵ : **C09B 67/26, C09D 11/16**

(30) Priority : **20.02.92 US 839100**

(43) Date of publication of application :
**25.08.93 Bulletin 93/34**

(84) Designated Contracting States :
**DE ES FR GB IT**

(71) Applicant : **BINNEY & SMITH INC.**
**1100 Church Lane P.O.431**
**Easton Pennsylvania 18044-0431 (US)**

(72) Inventor : **Kaiser, Richard J.**
**1575 Kenwood Drive**
**Bethlehem, Pennsylvania (US)**
Inventor : **Preuninger, Gail W.**
**2300 North Pewter Drive**
**Macungie, Pennsylvania (US)**

(74) Representative : **Baverstock, Michael George**
**Douglas et al**
**BOULT, WADE & TENNANT 27 Furnival Street**
**London, EC4A 1PQ (GB)**

(54) **Washable dye-containing composition.**

(57)    A washable dye-containing coloring composition comprising an acid dye, a dye vehicle, and a sulfonated phenol-formaldehyde condensation product in an amount effective to impart washability to said composition. The washable dye-containing composition may be in the form of a marker ink, a water-soluble tempera paint, a pan paint or the like commonly used by children.

EP 0 557 115 A1

This invention relates generally to the field of washable coloring materials for drawing, painting, and coloring purposes, such as marker inks and paints. In one particular aspect, the invention relates to tempera paints and it more specifically relates to the formulation of tempera paints that are washable and are especially suitable for use by children. In another aspect the invention relates to writing instruments containing liquid inks, and more specifically to the formulation of inks for use in marking pens or, simply, markers. In one preferred form, the invention relates to improvements in tempera paints, and coloring and drawing markers for use by young children.

Tempera paints comprise water soluble binder resin and dyes or pigments as colorants. Such colorants are ordinarily not washable and stain the skin of the user and many fabrics with which the paint may come in contact. In order to overcome this staining problem and to impart washability to the paint, it has been shown that certain colorants used in tempera paint can be chemically modified to improve washability. The chemically modified colorants, however, are expensive, and typically a higher concentration of the chemically modified colorant is needed to provide the desired depth of color in tempera paints.

It is known that children's coloring markers usually contain inks which are aqueous solutions of dyes known in the trade as "acid dyes." The term "acid dyes" is actually somewhat of a misnomer in that it does not describe any particular chemical type of dye, but rather refers to the traditional practice of dyeing fabrics from acidified solutions. Not all acid dyes are suitable for use in marker inks, however, and dyes having good chroma and color intensity and good water-solubility characteristics are typically utilized. However, acid dyes are not washable. Nevertheless, it would be desirable to use acid dyes in tempera paint, marker inks and the like if such dye-containing compositions could be made to be washable.

Marker inks ordinarily also include such ingredients as humectants, biocides, and surfactants. Humectants function to improve freeze/thaw stability and to control drying out of the marker tip, while biocides serve the obvious function of preventing spoilage of the ink during the expected shelf life of the marker product. In order to limit a grainy appearance of the ink as it is applied and/or to enhance the flow characteristics of the ink, a small amount of surfactant is ordinarily employed. It is important to note that surfactants, when used at all, are included in very low concentrations in marker inks in order to prevent the phenomenon known as "strike-through," where the ink soaks through the paper to which it is applied instead of remaining on the surface.

It is well known that a major deficiency of children's coloring markers is their propensity to leave enduring stains on both skin and clothing. While permanence is a desirable characteristic of the so-called "permanent" markers, it is one of the most objectionable of properties for coloring instruments used by young children. Accordingly, much effort has been expended over many years by producers of these instruments to reduce or eliminate staining. This is attested by the rather numerous offerings of so-called "washable" markers, many of which on close examination, are found to remove very poorly from fabrics that are typically used in children's clothing. Most such markers achieve their limited washability by utilizing dyes which have good fugivity from fabrics and by utilizing lowered dye concentrations in an effort to minimize skin staining. In most cases, these "washable" products leave objectionable stains on the skin. The inks used in such markers therefore lack fugivity from skin.

In a more recent approach, the tints or dyes used in these "washable" markers are produced by the chemical grafting of a chromophore onto a water soluble polymer, such as poly (ethylene glycol), in an effort to impart improved fugivity properties to the chromophore. While this approach is a workable one for enhancing washability from skin and launderability from fabric, it is relatively expensive.

It is therefore one general object of the invention to provide a method of washability from skin of a dye-containing composition.

Another object is to provide a water-soluble dye-containing composition which, in addition to being washable from skin, exhibits enhanced launderability from fabrics.

A related object is to provide non-toxic washable dye-containing compositions, such as paints and inks, which are suitable for use by young children who may make marks on themselves and their clothing.

Another related object is to improve washability from skin and/or launderability from fabrics of dye-containing compositions without the necessity for chemical or other alteration of the dyestuff itself.

A further object is to improve washability from skin of dye-containing compositions which otherwise have good launderability from textiles, but quite limited washability from skin.

Yet another object is to provide a non-toxic washable acid dye-containing composition that is washable from skin and launderable from fabrics.

These and other objects and advantages of the invention will be apparent to those skilled in this art from the following description of the invention and the appended claims.

The discovery of the present invention is that one may incorporate into a washable acid dye-containing composition an additive which will impart to the composition washability from skin. At the same time, it has been discovered that, in many instances, the additive will noticeably enhance launderability from fabrics ordinarily used in children's clothing. Thus, in accordance with the present invention, one may produce a washable acid dye-containing composition which has unexpectedly good washability from skin and, in many instances, enhanced launderability from textiles without the need for chemically altering the desired dye.

It has been discovered that sulfonated phenol-formaldehyde condensation products are effective in imparting washability from skin. The sulfonated phenol-formaldehyde condensation products may also enhance the launderability from fabrics of an acid dye-containing composition.

In one of its most general aspects, the invention includes acid dye-containing coloring compositions that include a sulfonated phenol-formaldehyde condensation product, which are easily washed from the skin, and, laundered from textiles. In another general aspect, the present invention includes a method of imparting skin washability and fabric launderability to an acid dye-containing composition by adding to the composition an effective amount of a sulfonated phenol-formaldehyde condensation product.

Thus, in one form, the invention is a washable dye-containing coloring composition comprising an acid dye, a dye vehicle, and a sulfonated phenol-formaldehyde condensation product in an amount effective to impart washability to the composition. As used herein, the term washable (or washability) includes washability from skin and/or launderability from textiles or fabrics. Washability from skin means that the stain or color imparted by the dye-containing composition to skin will not be visible to the naked eye after the skin is washed according to the procedure set forth hereinafter. Correspondingly, launderability from textiles or fabric means that the stain or color imparted by the dye-containing composition to fabric will not be visible to the naked eye after the fabric is laundered according to the procedures set forth hereinafter. The condensation products desirable for use in the dye containing composition of the present invention do not impair the stability of the composition. In one embodiment, the invention is a washable tempera paint, comprising an acid dye, water and a sulfonated phenol-formaldehyde condensation product in an amount effective to impart washability to the composition. Such a tempera paint may include binders, extenders, thickeners, and defoamers, and, preferably, preservatives. Additionally, as is known, freeze/thaw additives may also be included. In another embodiment, the invention is a washable marker ink, comprising an acid dye, water, and a sulfonated phenol-formaldehyde condensation product in an amount effective to impart washability. Such a marker ink, which is especially suitable for use by children, may also advantageously include humectants, surfactants, and, preferably, preservatives, all of which are well known in the art.

The additive which has now been discovered to impart skin washability and, in some instances, enhance fabric launderability of washable acid dye-containing compositions is a sulfonated phenol-formaldehyde condensation product. The sulfonated phenol-formaldehyde condensation products useful in the practice of the present invention desirably do not impair the stability of the dye-containing composition. By stability, it is meant that the dye-containing composition, which includes the condensation product additive, must not precipitate when maintained at a temperature of 140°F for two weeks. In addition, it is preferred to use sulfonated phenol-formaldehyde condensation products which, in addition to imparting washability from skin, also enhance launderability from textiles.

A sulfonated phenol-formaldehyde condensation product useful in the practice of the present invention is Intratex®N, commercially available from Crompton and Knowles Corporation. Sulfonated phenol-formaldehyde condensation products useful in the practice of the invention are, as described in U.S. Patent No. 4,501,591, preferably linear, low molecular weight condensation products, that is, products having an average molecular weight of less than about 1000, for example, in the range of 250 to 700. Such products are water-soluble and may be prepared by conventional art-recognized techniques, for example, by condensation of formaldehyde with one or more phenols in a mole ration of about 1.0 to 0.8, phenol(s) to formaldehyde, at a pH of less than 7 using an acid catalyst such HCl, wherein at least one of the phenols is a phenolsulfonic acid or alkali metal salt thereof. Preferably, the phenols comprise, in addition to the sulfonic acid or salt thereof, a sulfone, for example, dihydroxy aromatic diphenol sulfone. Such condensation products contain, in addition to sulfonic acid groups or alkali metal salts thereof, sulfone groups. Other sulfonated phenol-formaldehyde condensation products are described in U.S. Patent Re. 33,365, and U.S. Patent Nos. 4,592,940 and 4,680,212. The sulfonated phenol-formaldehyde condensation product, Intratex N is preferred. Intratex N exhibited the effect of imparting skin washability and enhancing fabric launderability. Other sulfonated phenol-formaldehyde condensation products may produce equivalent, or even better results and all are within the scope of the invention.

The specific mechanism by which the sulfonated phenol-formaldehyde condensation products impart skin washability and enhance fabric launderability is not known. However, it is postulated that the condensation products may adhere to the skin and to the fabric faster than the dye and tie up the reactive sites of these substrates, such that the dye has a reduced ability to physically or chemically associate with skin or fabric.

The sulfonated phenol-formaldehyde condensation product, Intratex N, was tested in numerous water-based acid-dye compositions comprising, water, defoamer, acid dyes, binders, extenders, thickeners, freeze-thaw additives and preservatives. In general, it has been found that the beneficial effect of the sulfonated phe-

3

nol-formaldehyde condensation product is dependent on the type and amount of dye that is present in the composition. Further, there must be a sufficient amount of the sulfonated phenol-formaldehyde condensation product in the composition to impart washability.

To impart washability, the amount of sulfonated phenol-formaldehyde condensation product present in the composition generally must exceed the amount of dye in the composition. Preferably, the weight ratio of sulfonated phenol-formaldehyde condensation product to dye in the dye-containing composition should be at least about 3:1. The upper limit of the weight ratio of sulfonated phenol-formaldehyde condensation product to dye is not critical, however, and may be as high as about 20:1 or so. The upper limit of the additive concentration is imposed only by the constraints on the viscosity and the long term stability of the composition. For tempera paints, the concentration of dye in the composition is desirably in the range of from about 0.25% to about 1.5% by weight, and the concentration of the sulfonated phenol-formaldehyde condensation product is desirably in the range of from about 2.5% to about 6.0% by weight. For marker inks, the concentration of dye in the composition is desirably in the range of from about 0.5% to about 8 to 10% by weight and the concentration of the sulfonated phenol-formaldehyde condensation product is desirably in the range of from about 18% to about 40% by weight.

It has been found that the addition of a sulfonated phenol-formaldehyde condensation product additive produces skin washability and may enhance fabric launderability when included in acid dye-containing compositions. In the practice of this invention, it is also preferable to select acid dyes which otherwise are known to have good launderability from fabrics in the absence of the additive. When used in the composition of the invention, such acid dyes not only have washability from skin, but enhanced launderability from fabric as well. By way of illustration, and not in limitation, acid dyes that have been found suitable for use in this invention are Acid Violet 17, Acid Blue 9, Acid Yellow 17, and Acid Red 388. Yellow F.D. & C #6 may also be used.

In addition to the acid dye, water and the sulfonated phenol-formaldehyde condensation product, the compositions of the invention may, when in the form of a tempera paint, also advantageously include defoamers, binders, extenders, thickeners, freeze-thaw additives and preservatives. These materials and their functions are well known, and their mention here is by way of illustration only.

For example, it is desirable to include a defoamer in the tempera paint to reduce foaming of the composition during preparation. A small amount of defoamer may be used, for example, less then one percent.

A binder may also be included in the composition to promote adhesion of the paint to the substrate and to assist in the film forming character of the paint after the water evaporates. Suitable binders include starches, such as dextrin, for example. A generally useful concentration range for the binder is from about 5% to about 20% by weight.

A thickener may be advantageously included in the composition in order to impart thickness and body to the paint. Suitable thickeners include, for example, water soluble cellulosics. Generally the concentration range for the thickeners is from about 0.5% to about 5% by weight.

Extenders may also be included in the paint composition in order to impart body to the paint and to assist in the brushability of the paint. Illustrative of suitable extenders are magnesium silicate hydrate (talc), microcrystalline silica, sodium aluminosilicate, calcium carbonate, clays and mixtures thereof. A generally useful concentration range for the extenders is from about 15% to about 40% by weight.

A freeze-thaw additive may be advantageously included in the tempera paint composition in order to prevent coagulation of the paint after a freeze-thaw cycle. The preferred freeze-thaw additive is sodium acetate. The concentration of this additive in the composition may be from about 2% to about 5% by weight.

In addition to the acid dye, water, and the sulfonated phenol-formaldehyde condensation product, the compositions of the invention may, when in the form of a marker ink, also advantageously include a humectant, a surfactant, and a preservative. These materials and their functions are well known, and their mention here is by way of illustration only.

For example, it is desirable to include a humectant in a marker ink to retard the evaporation of water from the ink solution. This avoids unduly rapid drying of the ink in the marker nib which can cause clogging of the nib and impair the function of the marker. Typical humectants include polyhydric alcohols such as glycerine, propylene glycol, ethylene glycol, and diethylene glycol, hydroxylated starches, low molecular weight (m.w. = 200-400) poly(ethylene glycols), and mixtures of these materials. A generally useful concentration range for these humectants is from about 5% up to about 30% by weight.

Small amounts of surfactant (up to about 0.1% by weight) are also useful in marker ink compositions for the purpose of adjusting such properties as viscosity (for proper dispensing of ink through the nib), and surface tension (for good flow properties without creating "strike-through"). Nonionic surfactants, such as poly (ethylene glycol) ether, alkylaryl polyether alcohol, fluorinated alkyl esters, and mixtures of such materials are preferred for use in marker inks.

Preservatives of conventional types are also advantageously employed in marker inks and tempera paints in order to extend the shelf life of the composition. Some typical preservatives useful in the present invention include methyl p-hydroxybenzoate, glutaraldehyde, hydroxybenzoic acid esters, 3-iodo-2-propynyl butyl carbamate, bicyclic oxazolidones, and a biocide comprising as the active ingredients 5-chloro-2-methyl-4-isothiazolin-3-one and, 2-methyl-4-isothiazolin-3-one. Preservatives are usually effective when present in an amount of from about 0.1% up to about 0.8% by weight.

## TEST PROCEDURES

The washability from skin of the compositions of the invention was measured by the following test:

1. Wash hands with soap and warm water. The pre-stain cleansing removes excess oil and dirt from the skin and provides a more consistent skin surface for testing. Allow the skin to dry for 30 seconds.

2. In the case of a composition of the invention used in a marker, draw a stripe on the palm of the hand with the flat side of the nib. In the usual case, a 1/4 inch wide by 1 inch long stripe works well. Apply enough pressure and/or multiple passes to develop a stripe with good color intensity. If it is desired to make a comparison among two or more compositions, more than one stripe may be drawn. Let stripes dry for fifteen minutes.

3. In the case of a composition of the invention used in a tempera paint, apply a stripe of paint with a paint brush and allow to dry for fifteen minutes.

4. In the case of a marker, place hand under tap and briefly rinse off excess ink with warm water.

5. In the case of tempera paint rinse with cold water and gently rub the stripe with a finger.

6. Wash hands with Ivory brand bar soap in the following manner: lather using a minimum amount of soap; replace soap in soap dish; rub hands together briskly with modest pressure for 30 seconds; rinse away soap.

7. Wipe hands dry with paper towels, and complete the drying with a relatively dry towel. A dry towel will help to rub off residual traces of ink.

The launderability from fabric of the compositions of the invention was measured by the following test.

1. Pre-wash test fabrics with bleach, non-staining water softener and ordinary household phosphate detergent powder using 120°F hot water as directed in ASTM D4265-83, and dry.

2. Cut test swatches of fabric to be tested.

3. Brush paint onto fabric swatches and allow to dry for 4 hours.

4. Staple a group of stained swatches to the edges of a bath towel.

5. Add a dummy load of unstained fabrics to provide a four pound wash load. Wash the load in a washing machine for 12 minutes with a hot (120°F)/cold cycle.

6. Dry the load in a dryer.

7. Detach the test swatches from the carrier towel, iron, and observe degree of staining.

### Evaluation Of Test Data

Skin washability and fabric launderability data are based on a visual rating system as follows:

0 =  no stain
1 =  barely visible
2 =  visible
3 =  noticeable
4 =  intense

In the following examples, dye-containing compositions were made from a base mix composition for a tempera paint. The base mix did not contain either dye or sulfonated phenol-formaldehyde condensation product.

The base mix, wherein the weight of ingredient is based on the total weight of the base mix, is as follows:

| Ingredient | Amount (w/w %) |
|---|---|
| Water | 51.86 |
| Defoamer | 0.51 |
| Binder | 8.65 |
| Extenders | 33.98 |
| Thickener | 1.25 |
| Freeze/Thaw additive | 3.12 |
| Preservatives | 0.63 |

Different color paints using different acid-dyes were made using the base mix composition described above. To 95.96 grams of the base mix, water, the acid-dye(s) set forth in Table I, and the sulfonated phenol-formaldehyde condensation product, if any, were added in the amounts also set forth in Table I. The pH was adjusted with 70% acetic acid to pH of 6.5. Controls without sulfonated phenol-formaldehyde condensation product were also prepared from the base mix. In all examples, when the composition includes an additive, the additive is the sulfonated phenol-formaldehyde condensation product, Intratex N. The compositions are set forth in Table I.

**TABLE I**

| Example Number | Washability Additive Weight % | Dye 1/Weight % | Dye 2/Weight % | $H_2O$ Added (wt.%) |
|---|---|---|---|---|
| 1 | 3.5% | Red 388; 0.5 | --- | 0 |
| 2 | -- | Red 388; 0.5 | --- | 3.5 |
| 3 | -- | Red 388; 0.24 | Blue 9; 0.16 | 3.6 |
| 4 | 3.5% | Red 388; 0.24 | Blue 9; 0.16 | 0.1 |
| 5 | -- | Violet 17; 0.125 | Red 388; 0.375 | 3.5 |
| 6 | 3.5% | Violet 17; 0.125 | Red 388; 0.375 | 0 |

The skin washability and fabric launderability of tempera paint compositions which include the sulfonated phenol-formaldehyde condensation product in accordance with this invention were tested and compared both to controls which do not include the condensation product and to tempera paints commercially available from Binney & Smith, Inc. identified as "stock," and having the same or comparable color to the color of the tempera paint in accordance with this invention. The data is set forth in Table II below. In Table II, the following abbreviations are used:

WR    denotes water rinse
C        denotes cotton 419
C/PE  denotes cotton/polyester 9406
W        denotes wool
V         denotes viscose
SS     denotes spun silk
N        denotes nylon
A        denotes acetate
BC    denotes bleached cotton

**TABLE II**

| SKIN | | | FABRICS | | | | | | | |
|---|---|---|---|---|---|---|---|---|---|---|
| Example | WR | Soap | C | C/PE | W | V | SS | N | A | BC |
| Ex. No.3 | 4 | 3 | 0 | 1 | 2 | - | 3 | - | - | - |
| Ex. No.4 | 3 | 0 | 0 | 0 | 0 | - | 2 | - | - | - |
| Stock | | 2 | 0 | 0 | 1 | 0 | - | 3 | - | - |
| Ex. No.5 | 5 | 4 | 1 | 2.5 | 3 | - | 4 | 2 | - | 1 |
| Ex. No.6 | 0 | 0 | 0 | 0.5 | 1 | - | 2 | 0 | - | 0 |
| Stock | 3 | 1.5 | 1 | 2 | 0 | - | 3 | 0 | - | - |

The data in Table II illustrate that an acid dye-containing coloring composition which includes a sulfonated phenol-formaldehyde condensation product in accordance with the invention is washable from skin and is launderable from fabric.

The Examples set forth in Table III illustrate the thermal stability of tempera paint compositions which include a sulfonated phenol-formaldehyde condensation product in accordance with this invention. The additive used is the commercially available Intratex N. The compositions of Examples 2 (with no sulfonated phenol-formaldehyde condensation product) and of Example 1 (with Intratex N) were tested for thermal stability over a temperature range of from room temperature to 140°F for a period of one month. The results of the test are set forth in Table III.

**TABLE III**

```
Composition
of            Temp.  Fresh        2 weeks      1 month
Example       °F     pH/visc*     pH/visc*     pH/visc*

2             RT     6.8/2800     7.5/2900     7.5/3000
1             RT     6.85/2900    7.2/2900     7.25/3300
2             105                 7.3/2500     7.4/2900
1             105                 7.2/3300     7.3/3500
2             120                 7.25/2300    7.3/2500
1             120                 7.20/2400    7.3/2800
2             140                 7.10/1700    7.10/1700
1             140                 7.10/2200    7.10/1700
```

* Visc denotes viscosity measured on Brookfield viscometer on a # 4 spindle at 20 rpm.

As can be seen from the viscosity and pH of the compositions, the thermal stability of acid dye-containing compositions are not impaired by the sulfonated phenol-formaldehyde condensation product. Additionally, at the elevated temperature of 140°F, the additive containing compositions in accordance with this invention did not precipitate or phase separate. Accordingly, the long term stability of these compositions is not impaired by the use of the condensation product.

A tempera paint composition was made with the following formulation:

| Base Formula | Parts |
|---|---|
| Water | 59.40 |
| Defoamer | 0.75 |
| F D & C Yellow | 0.50 |
| Violet 17 | 0.27 |
| Blue 9 | 0.30 |
| Yellow 17 | 0.12 |
| Binder | 8.30 |
| Extender | 20.00 |
| Thickener | 2.60 |
| Freeze/Thaw Additive | 3.00 |

Preservatives were added to the composition after neutralization with 70% acetic acid to pH 6.5. Different amounts of the sulfonated phenol-formaldehyde condensation product, Intratex N, were added to the composition. For Example 7, 2 wt.% Intratex N was added. For Example 8, 3 wt.% Intratex N was added, and for Example 9, 4 wt.% Intratex N was added. The compositions were adjusted with water to make a 100% formulation. These compositions were then tested for skin washability and fabric launderability, without aging, and after aging for 14 days at 140°F. The results are set forth in Table IV.

## TABLE IV

| | SKIN | | FABRICS | | | |
|---|---|---|---|---|---|---|
| Example | WR | Soap | C | C/PE | W | SS |
| Ex. No.7 | 2-3 | 1 | 0 | 1 | 2 | 4 |
| Ex. No.8 | 2-3 | 0 | 0 | 0.5 | 2 | 4 |
| Ex. No.9 | 2 | 0 | 0 | 0 | 2 | 4 |
| Ex. No.7* | 2 | 0 | 0 | 0 | 3 | 4 |
| Ex. No.8* | 1 | 0 | 0 | 0 | 2 | 3.5 |
| Ex. No.9* | 0 | 0 | 0 | 0 | 1 | 3 |

**\* After 14 days at 140°F**

The data in Table IV illustrates the skin washability and fabric launderability of acid dye-containing compositions in accordance with the present invention, at different concentrations of sulfonated phenol-formaldehyde condensation product.

From the foregoing description and examples, it can be seen that the addition of a sulfonated phenol-formaldehyde condensation product imparts washability to an acid dye-containing coloring composition. Skin washability and/or fabric launderability are imparted to such washable acid dye-containing compositions as marker inks and tempera paints, and it is apparent that the objects of the present invention have been achieved. While only certain embodiments have been set forth, alternative embodiments and various modifications will be apparent to those skilled in the art. These and other alternatives are considered equivalents and within the spirit and scope of the present invention.

## Claims

1. A washable dye-containing coloring composition for imparting color to a surface comprising:
   (a) an acid dye,

(b) a dye vehicle, and
(c) a sulfonated phenol-formaldehyde condensation product in an amount effective to impart washability to the composition.

2. A composition as claimed in claim 1 wherein said dye vehicle is water.

3. A composition as claimed in claim 1 or claim 2 further comprising a binder.

4. A composition as claimed in claim 3 wherein said binder is dextrin.

5. A composition as claimed in claim 3 or claim 4 wherein said binder is present in an amount of from about 5% to about 15% by weight.

6. A composition as claimed in any one of the preceding claims further comprising an extender.

7. A composition as claimed in claim 6 wherein said extender is selected from magnesium silicate hydrate, microcrystalline silica, sodium aluminosilicate, calcium carbonate and mixtures thereof.

8. A composition as claimed in claim 6 or claim 7 wherein said extender is present in an amount of from about 15% to about 40% by weight.

9. A composition as claimed in any one of the preceding claims further comprising a preservative.

10. A composition as claimed in claim 9 wherein said preservative is selected from methyl p-hydroxybenzoate, glutaraldehyde, hydroxybenzoic acid esters, 3-iodo-2-propynyl butyl carbamate, bicyclic oxazolidones solution and a biocide comprising as the active ingredients 5-chloro-2-methyl-4-isothiazolin-3-one and 2-methyl-4-isothiazolin-3-one, and mixtures thereof.

11. A composition as claimed in claim 9 or claim 10 wherein said preservative is present in amount of from about 0.1% to about 0.8% by weight.

12. A composition as claimed in any one of the preceding claims wherein said sulfonated phenol-formaldehyde condensation product is present in a weight ratio of sulfonated phenol-formaldehyde condensation product to dye of from about 3:1 to about 20:1.

13. An ink comprising:
(a) an acid dye,
(b) water, and
(c) a sulfonated phenol-formaldehyde condensation product in an amount effective to impart washability to the composition.

14. A marking instrument containing an ink, said ink comprising:
(a) an acid dye,
(b) water, and
(c) a sulfonated phenol-formaldehyde condensation product in an amount effective to impart washability to the composition.

15. A method of imparting skin washability to a water-soluble composition containing an acid dye, comprising adding to said composition a sulfonated phenol-formaldehyde condensation product in a weight ratio of sulfonated phenol-formaldehyde condensation product to dye of from about 3:1 to about 20:1.

16. An aqueous paint composition comprising an acid dye, a thickener, an opacifier, and a sulfonated phenol-formaldehyde condensation product, said sulfonated phenol-formaldehyde condensation product present in said composition in a weight ratio of sulfonated phenol-formaldehyde condensation product to dye of from about 3:1 to about 20:1.

17. A method of imparting washability to an aqueous ink composition containing an acid dye, comprising the step of adding to said composition a sulfonated phenol-formaldehyde condensation product in a weight ratio of sulfonated phenol-formaldehyde condensation product to dye of from about 3:1 to about 20:1.

18. A method of imparting washability to an aqueous paint composition containing an acid dye, comprising the step of adding to said composition a sulfonated phenol-formaldehyde condensation product in a weight ratio of sulfonated phenol-formaldehyde condensation product to dye of from about 3:1 to about 20:1.

19. An aqueous ink composition suitable for use in a marking instrument, said composition comprising:
    an acid dye,
    a humectant in an amount of from about 5% up to about 30% by weight,
    a surfactant in an amount of from 0% up to about 0.1% by weight,
    a preservative in an amount of from about 0.1% up to about 0.6% by weight, and,
    a sulfonated phenol-formaldehyde condensation product in a weight ratio of sulfonated phenol-formaldehyde condensation product to dye of from about 3:1 to about 20:1.

European Patent Office

**EUROPEAN SEARCH REPORT**

Application Number

| DOCUMENTS CONSIDERED TO BE RELEVANT | | | EP 93301225.4 | |
|---|---|---|---|---|
| Category | Citation of document with indication, where appropriate, of relevant passages | Relevant to claim | CLASSIFICATION OF THE APPLICATION (Int. Cl.5) | |
| A | DE - A - 3 938 002 (SAKURA COLOR PRODUCTS CORPORATION) * Claims * | 1,2,6, 13,14, 16-19 | C 09 B 67/26 C 09 D 11/16 | |
| A | EP - A - 0 148 615 (MINNESOTA MINING AND MANUFACTURING COMPANY) * Claims * | 1,2, 12-19 | | |
| A | US - A - 4 923 481 (GALLI et al.) * Claims; column 2, line 64 - column 3, line 43 * | 1-3, 12,13, 16 | | |
| A | EP - A - 0 037 117 (SUMITOMO CHEMICAL COMPANY, LIMITED) * Claims * | 1,2, 12,16 | | |
| A | GB - A - 2 138 834 (J.S. STAEDTLER) * Claims; page 3, lines 10-40 * | 1,13 | TECHNICAL FIELDS SEARCHED (Int. Cl.5) C 09 B C 09 D | |

The present search report has been drawn up for all claims

| Place of search | Date of completion of the search | Examiner |
|---|---|---|
| VIENNA | 25-05-1993 | HAUSWIRTH |

EPO FORM 1503 03.82 (P0401)